# EUROPÄISCHE PATENTSCHRIFT

(11) **EP 2 554 275 B1**
(45) Veröffentlichungstag und Bekanntmachung des Hinweises auf die Patenterteilung: **08.07.2015**
(21) Anmeldenummer: 11006383.1
(22) Anmeldetag: 03.08.2011
(51) Int. Cl.: B05B 12/14, F16K 11/078

(54) **Farbwechsler**
Colour changer
Changeur de teinte

(43) Veröffentlichungstag der Anmeldung: 06.02.2013
(73) Patentinhaber: ABB Technology AG, 8050 Zürich (CH)
(72) Erfinder: Börner, Gunter, Dr., 74889 Sinsheim (DE); Zang, Udo, 61169 Friedberg (DE)
(74) Vertreter: Kock, Ina

(56) Entgegenhaltungen:
- WO-A1-2009/123794
- AT-B- 231 592
- CH-B- 531 900
- JP-A- 9 308 846
- JP-U- 53 016 061

## Beschreibung

Die Erfindung betrifft einen Farbwechsler für die Auswahl eines Lackmaterials aus mehreren Lackmaterialien eines Farbversorgungssystems in automatisierten Lackieranlagen.

Es ist allgemein bekannt, dass in industriellen Lackieranlagen, beispielsweise im Bereich der Automobilindustrie, Lackmaterialien mit einer Vielzahl an verschiedenen Farbtönen für die Beschichtung von Werkstücken wie Automobilkarosserien verwendet werden. Je nach Marktsegment des jeweiligen Herstellers können dies beispielsweise zehn verschiedene Farbtöne aber auch fünfzig und mehr sein. Die Lackierung von Werkstücken erfolgt zumeist mittels Lackierrobotern, welche in einer klimatisierten Lackierkabine angeordnet sind. Die Werkstücke werden typischerweise über eine Fördereinrichtung in die Lackierkabine eingefahren, wo sie dann von den Lackierrobotern beschichtet werden. Die Abfolge der in einem jeweiligen Farbton zu beschichtenden Werkstücke auf der Fördereinrichtung ist zumeist durch den Gesamtproduktionsablauf vorgegeben. Daher ist ein häufiger Farbwechsel an den jeweiligen Lackierrobotern notwendig. Die Zahl der erforderlichen Farbwechsel kann bei einer typischen Taktzeit von 60s - 80s pro Werkstück beziehungsweise Werkstückträger einige hundert pro Tag und Roboter betragen.

Ein Farbwechsel ist jedoch immer mit einem Verlust an Lackmaterial verbunden. Bei einem Farbwechsler gemäß dem Stand der Technik mündet nämlich eine Vielzahl an Lackmaterialversorgungsschläuchen über entsprechende Schaltventile in einen gemeinsamen Sammelkanal. Dieser ist an seinem Ende verschlossen und an seinem anderen Ende mittels einer Schlauchverbindung strömungstechnisch mit einem Zerstäuber verbunden, welcher an der Spitze des Lackierroboterarms angebracht ist und von diesem dann während des Beschichtungsvorgangs entsprechend einer vorgegebenen Bahn um das zu beschichtende Werkstück geführt wird. Bei einem Farbwechsel ist zunächst das in gemeinsamen Sammelkanal, Schlauchverbindung und Zerstäuber befindliche Lackmaterial als Verwurf auszudrücken, bevor diese Strecke dann gespült und danach neues Lackmaterial angedrückt werden kann.

Der auftretende Lackmaterialverwurf ist einerseits durch eine möglichst nahe Anbringung des Farbwechslers am Zerstäuber reduzierbar, wobei hier bei Lackierrobotern aber sowohl Platz- als auch Gewichtsprobleme auftreten, so dass der Farbwechsler zumindest bei einer mittleren oder höheren Anzahl an Farbtönen nicht beliebig nahe an den Zerstäuber platzierbar ist. Eine Reduktion von Lackmaterialverwurf ist zudem auch durch eine Verkleinerung des Sammelkanals zu erzielen, welcher allerdings insbesondere bei einer hohen Anzahl von in diesen mündenden Farbkanälen entsprechend lang ausfällt. Daher sind auch der Verkleinerung des Verlustvolumens im Sammelkanal Grenzen gesetzt.

*So ist im Patentdokument* CH 531900B *eine Pulverspritzpistole zum Verspritzen von verschiedenartigen Pulvern aus einem gemeinsamen Pistolen-Pulverkanal offenbart. Ein Dreh- beziehungsweise Verschiebemechanismus ist dafür vorgesehen, selektiv einen von mehreren Zuführkanälen mit dem gemeinsamen Pistolen-Pulverkanal zu verbinden. Das Patentdokument* AT 231592 B *offenbart eine Flüssigkeitswechselvorrichtung, insbesondere zum Lackwechsel, bei welchem ein drehbarer Verteiler einen Zerstäuber selektiv mit einer von mehreren Farbversorgungsleitungen kuppelt.*

*Auch das Patentdokument* JP 9308846 *offenbart einen Farbwechsler, bei welchem mittels eines drehbaren Verteilers ein Ausgangskanal selektiv mit einem von mehreren Zuführleitungen verbunden werden kann. Die Patentanmeldung* WO 2009/123794 A1 *offenbart einen Verteilmechanismus für ein Pulverbeschichtungssystem, bei welchem durch eine Linearbewegung ein Ausgangskanal selektiv mit einem von mehreren in einer Ebene liegenden Anschlussventilen von Zuführleitungen für Pulverbeschichtungsmaterial verbindbar ist.*

Nachteilig ist also, dass insbesondere bei Vorhandensein einer Vielzahl an zu wechselnden Farbtönen hohe Farbwechselverluste auftreten, welche im Bereich von beispielsweise 30ml pro Farbwechsel alleine im Sammelkanal eines Farbwechslers gemäß dem Stand der Technik betragen.

Ausgehend von diesem Stand der Technik ist es Aufgabe der Erfindung, einen Farbwechsler anzugeben, welcher einen weiter reduzierten Farbwechselverlust ermöglicht und darüber hinaus eine sehr kompakte Bauweise aufweist.

Diese Aufgabe wird gelöst durch einen Farbwechsler der eingangs genannten Art. Dieser ist gekennzeichnet durch einen ersten rohrähnlichen Hohlkörper mit einer Mehrzahl von Farbversorgungskanälen, welche durch die Wandung des ersten Hohlkörpers zu einem inneren Zentralkanal geführt sind und welche an ihrem dem Zentralkanal abgewandten Ende dafür vorgesehen sind, mit einem Farbversorgungssystem tem verbunden zu werden, einen zweiten rohrähnlichen Hohlkörper mit einem exakt auf den Innenquerschnitt des Zentralkanals angepassten Außenquerschnitt und einem Einlasskanal mit annähernd auf den Querschnitt der Farbversorgungskanäle angepassten Querschnitt, welcher durch die Wandung des zweiten Hohlkörpers in dessen kanalähnlichen Innenraum geführt ist, dessen eines Ende hermetisch verschließbar beziehungsweise verschlossen ist und an dessen anderem Ende Anschlussmittel vorgesehen sind, wobei der zweite Hohlkörper zumindest teilweise innerhalb des Zentralkanals des ersten Hohlkörpers beweglich angeordnet ist, so dass je nach Relativposition der beiden Hohlkörper zueinander der Einlasskanal wahlweise mit einem der Farbversorgungskanäle verbindbar ist.

Die Grundidee der Erfindung besteht darin, den Sammelkanal völlig zu vermeiden und ein bewegliches Rohrstück mit einer Einlassöffnung vorzusehen, welche bedarfsweise gegenüber einem von mehreren Farbversorgungskanälen positioniert werden kann. Je nach gegenüberliegender Positionierung von Einlassöffnung und gewähltem Farbversorgungskanal strömt dann das gewünschte Lackmaterial aus dem Farbversorgungskanal in die Einlassöffnung, dann in den kanalähnlichen Innenraum des beweglichen Rohrstücks beziehungsweise des zweiten rohrähnlichen Hohlkörpers und wird von dort dem Zerstäuber zugeführt. Durch die Bewegbarkeit des zweiten rohrähnlichen Hohlkörpers gegenüber dem ersten rohrähnlichen Hohlkörper ist das Innenvolumen des zweiten rohrähnlichen Hohlkörpers gegenüber dem Sammelkanalvolumen eines vergleichbaren handelsüblichen Farbwechsler mit derselben Farbanzahl reduziert. In vorteilhafter Weise ist damit auch der Lackmaterialverwurf bei einem Farbwechsel reduziert.

Idealerweise ist das verschließbare Ende des zweiten Hohlkörpers verschlossen beziehungsweise der zweite Hohlkörper bereits so geformt, dass überhaupt keine Öffnung vorhanden ist so dass das darin befindliche Lackmaterial ausschließlich über das andere Ende abgeführt wird.

Als weiterhin vorteilhaft erweist sich die exakte Anpassung des Außenquerschnittes des zweiten rohrähnlichen Hohlkörpers auf den Querschnitt des inneren Zentralkanals des ersten Hohlkörpers. Dadurch ist nämlich einerseits eine seitliche gleitende Verschiebebewegung der gegeneinander beweglichen Kontaktflächen ermöglicht, wobei gleichzeitig eine Bewegung der Kontaktflächen senkrecht zur Verschiebeebene ausgeschlossen ist. Dies bedeutet, dass die gemeinsamen Kontaktflächen zwischen erstem und zweitem Hohlkörper letztendlich hermetisch abdichtend sind, insofern sich nicht der Einlasskanal und einer der Farbversorgungskanäle gegenüber stehen. Eine zusätzliche Andockbewegung in Querrichtung zur Anordnungsebene, wie bei der Kupplung von Lackversorgungsleitungen vereinzelt auch angewandt ist, ist damit in vorteilhafter Weise vermieden. Die beiden ineinander verschachtelten und gegeneinander beweglichen Hohlkörper erfüllen somit eine Selektionsfunktion für die Auswahl des Lackmaterials und gleichzeitig eine Ventilfunktion für jeden der Farbversorgungskanäle.

Bei der Relativbewegung der beiden Hohlkörper gegeneinander ist es letztendlich unerheblich, welcher der beiden Hohlkörper bewegt wird. Es ist auch möglich, dass jeder Hohlkörper dafür vorgesehen ist, eine individuelle Bewegungskomponente durchzuführen. Durch den Wegfall von separaten Ventilen für jeden Farbversorgungskanal ist zudem eine sehr kompakte Bauform ermöglicht.

Die Anschlussmittel an dem offenen Ende des zweiten rohrähnlichen Hohlkörpers dienen dem Anschluss einer Abführleitung zu einem Zerstäuber, so dass dieser dann im Betrieb hierüber mit Lackmaterial versorgt wird. Optional ist in der Versorgungsleitung oder im Zerstäuber ein Schaltventil zur abschließenden Freigabe des Lackmaterialflusses vorgesehen. Die Anschlussmittel können beispielsweise durch eine einfache Schlauchkupplung realisiert sein.

Gemäß einer bevorzugten Ausführungsform des erfindungsgemäßen Farbwechslers ist der zweite Hohlkörper längs der axialen Erstreckung des Zentralkanals bewegbar In diesem Fall sind die Farbversorgungskanäle längs der axialen Erstreckung des inneren Zentralkanals angeordnet und durch eine entsprechende axiale Positionierung des zweiten Hohlkörpers mit seiner Einlassöffnung verbindbar. Die Querschnittsform des inneren Zentralkanals kann prinzipiell beliebig sein.

Entsprechend einer weiteren Ausführungsform der Erfindung erweist sich jedoch als besonders günstig, wenn der Zentralkanal einen kreisrunden Querschnitt aufweist und der zweite Hohlkörper somit in dem Zentralkanal drehbar ist. Somit ist es bei sternförmiger Anordnung der Farbversorgungskanäle um den inneren Zentralkanal möglich, durch eine Drehbewegung der beiden Hohlkörper zueinander einen der jeweiligen Farbversorgungskanäle mit der Einlassöffnung zu verbinden und damit das gewünschte Lackmaterial auszuwählen.

Gemäß einer besonders bevorzugten Ausführungsform ist bei kreisrundem Querschnitt des inneren Zentralkanals sowohl eine axiale Bewegbarkeit als auch eine Drehbarkeit der beiden Hohlkörper zueinander gegeben. Auf diese Weise lässt sich auf engstem Raum eine Vielzahl von Farbversorgungskanälen unterbringen, welche wahlweise mit der Einlassöffnung des zweiten rohrähnlichen Hohlkörpers verbindbar sind, beispielsweise fünf sternähnliche Ebenen mit jeweils acht Farbversorgungskanälen. Es sind aber auch beispielsweise zwölf Ebenen mit je zwei gegenüber liegend angeordneten Farbeinlasskanälen möglich um eine eher flache Ausgestaltung des Farbwechslers mit seinen Zuführleitungen zu erreichen.

Einer weiteren Variante des erfindungsgemäßen Farbwechslers folgende ist der zweite Hohlkörper mittels einer spiralähnlichen Drehbewegung gegenüber dem Zentralkanal bewegbar. Hierbei ist jede Drehbewegung mit einer axialen Verschiebung verbunden, so dass die wahlweise mit der Einlassöffnung zu verbindenden Farbversorgungskanäle längs einer spiralähnlichen Bahn liegen. Hierdurch wird einerseits eine sehr kompakte Anordnung der Farbversorgungskanäle, nämlich sternähnlich in mehreren Ebenen, erreicht, andererseits ist durch den eindeutig vorgegebenen Bewegungspfad die Ansteuerung des erfindungsgemäßen Farbwechslers erreicht.

Zur Erzeugung einer Relativbewegung zwischen erstem und zweitem Hohlkörper ist erfindungsgemäß wenigstens eine Antriebsvorrichtung vorgesehen. Diese ist entweder mit dem zweiten rohrähnlichen Hohlkörper oder aber auch dem ersten rohrähnlichen Hohlkörper verbunden. Zur Erzeugung einer rotatorischen und einer translatorischen Bewegung sind vorzugsweise zwei Antriebsvorrichtungen vorgesehen, welche bedarfsweise jeweils auf einen der beiden Hohlkörper wirken. Bezüglich einer Bewegung des zweiten rohrähnlichen Hohlkörpers erweist es sich als günstig, wenn die Antriebsvorrichtung mechanisch mit dem verschlossenen Ende des zweiten Hohlkörpers verbunden ist.

Ein Stellantrieb erweist sich als besonders günstige Variante einer Antriebsvorrichtung, weil dieser auf einfache Weise eine exakte Positionierung ermöglicht. Ein Stellantrieb basiert beispielsweise auf einem Schrittmotor oder dergleichen.

Einer erfindungsgemäßen Variante des Farbwechslers folgend ist der zweite Hohlkörper kraftschlüssig mit einer drehbar in einem Gewindegang angeordneten Gewindespindel verbunden, so dass hierdurch die Bewegung des zweiten Hohlkörpers vorgegeben ist. Somit folgt eine Bewegung des Einlasskanals dem Gewindegang und führt somit eine spiralähnliche Bewegung aus, wie sie zuvor bereits beschrieben wurde. Vorzugsweise ist der Gewindegang so steil, dass pro Umdrehung wenigstens der Mindestabstand zwischen zwei übereinander angeordneten Farbversorgungskanalebenen eingehalten ist, beispielsweise 1,5cm.

Gemäß einer weiteren Variante des Farbwechslers beträgt die axiale Länge des zweiten Hohlkörpers wenigstens die doppelte Länge von dessen axialer Bewegbarkeit. Hiermit wird nämlich bei axialer Beweglichkeit der beiden Hohlkörper zueinander erreicht, dass auch in den beiden jeweiligen axialen Endpositionen der zweite im inneren Zentralkanal befindliche Hohlkörper alle Farbzuführkanäle hermetisch verschließt außer demjenigen, welcher gegebenenfalls mit der Einlassöffnung verbunden ist. Hierzu ist der Einlasskanal axial mittig zur doppelten Länge der axialen Bewegbarkeit angeordnet. Unter Einhaltung dieser Mindestanforderung ist es selbstverständlich möglich, den zweiten rohrähnlichen Hohlkörper bedarfsweise auch länger auszugestalten. Eine eventuelle Verlängerung kann problemlos auch mit geringerem Querschnitt ausgeführt werden, weil eine Abdichtfunktion für einen verlängerten Bereich nicht erforderlich ist.

In einer bevorzugten Erfindungsvariante sind wenigstens einer der Farbversorgungskanäle oder der Einlasskanal auf der jeweils in den Zentralkanal mündenden Seite von einer jeweiligen Abdichtvorrichtung umgeben. Eine Abdichtvorrichtung ist beispielsweise ein O-Ring, welcher versenkt um die Mündung des jeweiligen Kanals angeordnet ist. Aus Verschleiß und Wartungsgründen erweist sich allerdings eine Anordnungsvariante um die Einlassöffnung des zweiten rohrähnlichen Hohlkörpers als günstiger. Durch Herausnehmen des inneren Hohlkörpers zu Wartungszwecken ist dann nämlich eine sehr gute Zugänglichkeit gegeben. Eine derartige Abdichtvorrichtung ist eine zusätzliche Sicherheitsmaßnahme, um eine Farbverschleppung, also ein marginales Vermischen der Lackmaterialien zweier Farbzufuhrkanäle, zu unterbinden.

Vorzugsweise ist die Abdichtvorrichtung aus einem elastischen Material, beispielsweise Kalrez, gefertigt und derart angeordnet, dass sie geringfügig in den Zentralkanal hineinragt. Durch die exakte Anpassung des Außenquerschnitts des zweiten rohrähnlichen Hohlkörpers auf den Querschnitt des inneren Zentralkanals ist kein Spiel zwischen den jeweiligen Kontaktflächen gegeben. Daher wird eine theoretisch in den inneren Zentralkanal hineinragende Abdichtvorrichtung entsprechend komprimiert, so dass diese mit einem entsprechenden Druck auf die gegenüberliegende Kontaktfläche wirkt.

Optional sind Ventilmittel in den Farbversorgungskanälen vorgesehen, durch welche zusätzlich zu der ohnehin vorhandenen Ventilfunktion der beiden gegeneinander beweglichen Hohlkörper eine weitere redundante in Reihe geschaltete Ventilfunktion realisiert ist. Auf diese Weise ist die Betriebssicherheit des erfindungsgemäßen Farbwechslers weiterhin gesteigert, weil zur Freischaltung eines Farbversorgungskanals nunmehr sowohl der Einlasskanal der Mündung des ausgewählten Farbzuführkanals gegenüber stehen muss und zudem das entsprechende Ventil geöffnet sein muss. Erfindungsgemäß sind aber auch mehrere Ventilmittel je Farbversorgungskanal möglich, beispielsweise eines für die Farbversorgung als solche und ein weiteres, ebenfalls in den Farbversorgungskanal mündendes Ventil für Spül- beziehungsweise Lösungsmittel. Dies ermöglicht ein Spülen des kanalähnlichen Innenraums des zweiten Hohlkörpers sowie einer daran angeschlossenen Verbindungsleitung zu einem Zerstäuber im Falle eines Farbwechsels.

Optional ist es aber auch ohne weiteres möglich, einen Farbzuführkanal statt an eine Farbversorgungsleitung an eine Spülmittelleitung anzuschließen. Dann müsste bei einem Farbwechsel zunächst die Eingangsöffnung gegenüber der Mündung des Spülmittelversorgungskanals positioniert werden und ein gegebenenfalls vorhandenes Ventil geöffnet werden. Nach Reinigung der zu spülenden Strecke und des Zerstäubers erfolgt dann eine Positionierung der Einlassöffnung gegenüber der Mündung des gewünschten Farbversorgungskanals.

Eine weitere erfindungsgemäße Spülmöglichkeit des Farbwechslers besteht darin, dass über eine der beiden Stirnseiten des zweiten rohrähnlichen Hohlkörpers ein Spülkanal in dessen kanalähnlichen Innenraum geführt ist, der stirnseitig für einen Anschluss mit einer Lösemittelversorgung vorgesehen ist. Auf diese Weise lässt sich ein Lösemittel beziehungsweise Luft- Lösemittelgemisch stirnseitig in den zu reinigenden Innenraum des zweiten rohrähnlichen Hohlkörpers einführen. Der Kanal mündet dann vorzugsweise im hinteren, verschlossenen Bereich des Innenraums um beim der Abflussbewegung zum gegenüberliegenden offenen Bereich eine möglichst hohe Reinigungswirkung zu erzielen.

Vorzugsweise ist wenigstens einer der beiden Hohlkörper aus Edelstahl gefertigt wobei die Kontaktflächen der gegeneinander beweglichen Hohlkörper idealerweise poliert sind. Hierdurch ist einerseits eine hohe Resistenz gegen gegebenenfalls abräsive oder chemisch aggressive Lackmaterialien gegeben. Andererseits begünstigt ein Polieren der Kontaktflächen die exakte Abstimmung der Querschnitte der ineinander beweglichen Hohlkörper, so dass deren Ventilfunktion dadurch vorteilhaft optimiert wird.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: einen Schnitt durch einen exemplarischen ersten Farbwechsler und
- Fig. 2: einen Schnitt durch einen exemplarischen zweiten Farbwechsler.

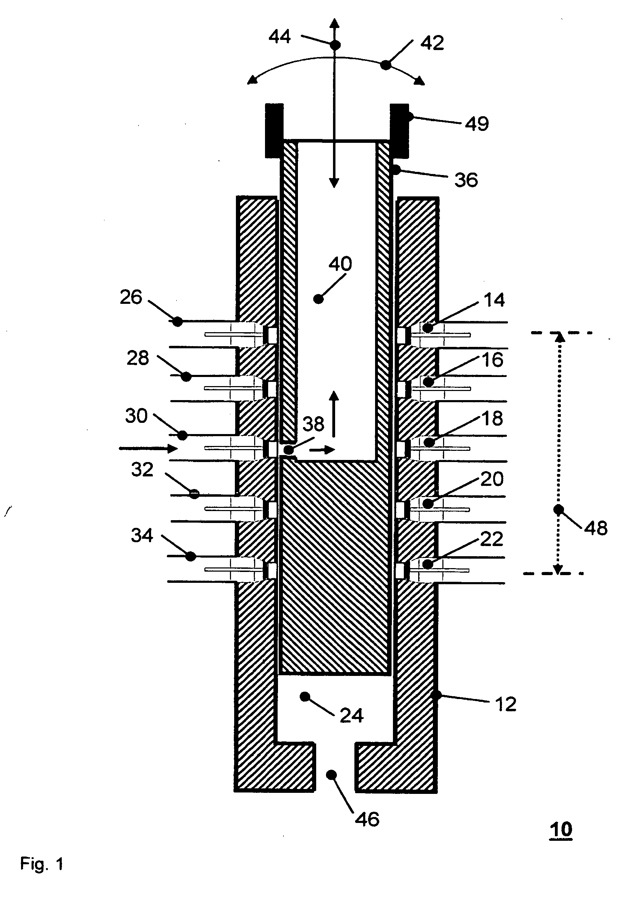

Fig. 1 zeigt einen Schnitt durch einen exemplarischen ersten Farbwechsler 10. Ein erster rohrähnlicher Hohlkörper 12 bildet die Zentralkomponente des Farbwechslers. In einen rohrähnlich ausgeprägten inneren Zentralkanal 24 münden beidseitig mehrere Farbversorgungskanäle 14, 16, 18, 20, 22, welche durch die Wandung des Hohlkörpers 12 geführt sind. In den Farbversorgungskanälen 14, 16, 18, 20, 22 sind ohne Bezugszeichen optionale Ventile angedeutet, durch welche diese zusätzlich separat verschließbar sind. Diese sind für die reine Funktionalität des Farbwechslers nicht notwendig und stellen lediglich eine zusätzliche Sicherheitsmaßnahme zur Vermeidung einer Farbverschleppung dar. An den dem inneren Zentralkanal abgewandten Enden der Farbversorgungskanäle 14, 16, 18, 20, 22 sind Schlauchleitungen 26, 28, 30, 32, 34 angedeutet welche Zuleitungen zu Ringleitungen eines Farbversorgungssystems mit einer Vielzahl von Lackmaterialien verschiedener Farbtöne darstellen.

Im inneren Zentralkanal 24 angeordnet ist ein rotatorisch 42 und translatorisch 44 bewegbarer zweiter rohrähnlicher Hohlkörper 36 angeordnet. Dieser weist einen kanalähnlichen inneren Hohlraum 40 auf welcher an seinem unteren axial verschlossenen Ende eine seitlich durch dessen Wandung geführte Einlassöffnung 38 aufweist. Diese ist dafür vorgesehen, durch entsprechende Bewegung des zweiten Hohlkörpers gegenüber der Mündung eines auszuwählenden Farbversorgungskanals 14, 16, 18, 20, 22 positioniert zu werden, so dass das darin befindliche und üblicherweise unter Druck stehende Lackmaterial in den kanalähnlichen Innenraum 40 eintreten und von dort zu einem nicht gezeigten Zerstäuber geführt werden kann.

Die Kontaktflächen zwischen der Wandung des inneren Zentralkanals 24 und der Außenfläche des zweiten rohrähnlichen Hohlkörpers 36 sind poliert und exakt aufeinander abgestimmt, so dass diese hermetisch schließend wirken. Der in der Figur angedeutete Spalt zwischen den genannten Flächen dient lediglich der zeichnerischen Trennung der beiden Komponenten und ist bei einem realen Farbwechsler nicht vorhanden. Gegebenenfalls sind die Kontaktflächen noch mit einem lackverträglichen Gleitmittel versehen. Durch diese Konstruktion bedingt ist jeder Farbversorgungskanal hermetisch durch den davor befindlichen zweiten rohrähnlichen Hohlkörper hermetisch verschlossen. Ausnahme ist demnach lediglich ein der Farbversorgungskanal, dessen Mündung gegenüber liegend die Einlassöffnung 38 positioniert ist.

Der maximale axiale Hub des zweiten rohrähnlichen Zentralkörpers in Pfeilrichtung 44 ist mit dem Pfeil mit dem Bezugszeichen 48 angedeutet. Die Länge des Hubs resultiert aus der axialen Bewegung, welche notwendig ist, sowohl den untersten als auch den obersten Farbversorgungskanal 14, 16, 18, 20, 22 mit der Einlassöffnung 38 zu verbinden.

Im hinteren Bereich des ersten rohrähnlichen Hohlkörpers ist eine Ausgleichsöffnung 46 vorgesehen. Diese dient einerseits dem Druckausgleich bei Bewegung des zweiten rohrähnlichen Hohlkörpers und ist andererseits dafür vorgesehen, eine Kupplungsvorrichtung zu einer nicht gezeigten Antriebsvorrichtung hindurchzuführen. Im vorderen Bereich des zweiten rohrähnlichen Hohlkörpers 36, dessen kanalähnlicher Innenraum aus zeichnerischen Gründen mit einem deutlich zu erhöhtem Querschnitt gezeigt, sind Anschlussvorrichtungen 49 gezeigt, an welche beispielsweise ein Schlauch anschließbar ist, welcher dann zu einem ebenfalls nicht gezeigten Zerstäuber geführt ist.

Beim Betrieb des Farbwechslers 10 ist im Falle eines Farbwechsels der kanalähnliche Innenraum 40 zu spülen. Dies kann einerseits durch zusätzliche Einführung von Lösemittel über die jeweiligen Farbversorgungskanäle 14, 16, 18, 20, 22 erfolgen, welche in diesem Falle dann zusätzlich Ventilmittel zum Schalten der jeweiligen Lackleitung und der jeweiligen Lösemittelleitung benötigen. Optional ist auch das Spülen über einen zugeordneten mit einem Lösemittel gefüllten Farbversorgungskanal 14, 16, 18, 20, 22 möglich, welcher dann bei jedem Farbwechsel zuvor anzufahren ist.

Ein Typischer Farbwechsler weist beispielsweise zwölf axial nebeneinander angeordnete Blöcke mit einer Breite von jeweils 20mm auf, wobei sich eine Länge des zweiten rohrähnlichen Hohlkörpers von ca. 280mm ergibt. Ein geeigneter Durchmesser für den kanalähnlichen Innenraum des zweiten Hohlkörpers beträgt beispielsweise 4mm, um dessen Innenvolumen möglichst gering zu halten. Dies ist für eine Lackflussrate von angenommen 900ml/min und einer angenommenen Viskosität des Lackmaterials von 300mPas ein hinreichender Durchmesser.

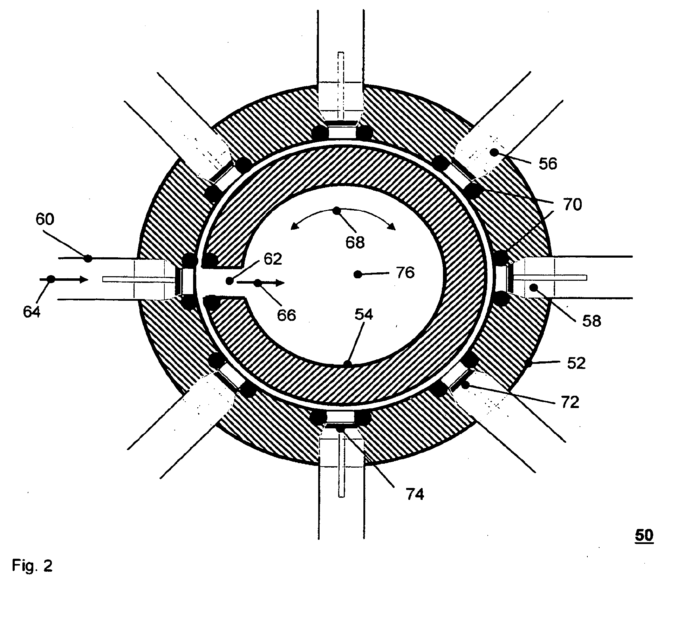

Figur 2 zeigt einen Schnitt durch einen exemplarischen zweiten Farbwechsler 50 in einer Draufsicht. Ein erster rohrähnlicher Hohlkörper 52 mit kreisrundem Querschnitt seines inneren Zentralkanals bildet die Zentralkomponente des Farbwechslers.

Durch die Wandung des Hohlkörpers 52 hindurch sind sternförmig mehrere Farbversorgungskanäle 56, 58 in dessen inneren Zentralkanal geführt. Diese weisen zusätzlich jeweilige Ventile 72, 74 auf, um die Farbversorgungskanäle 56, 58 redundant absperren zu können. Im inneren Zentralkanal ist drehbar 68 beweglich ein zweiter rohrähnlicher Hohlkörper 54 angeordnet. Dieser weist eine Einlassöffnung 62 auf, welche in dessen kanalähnlichen Innenraum 76 mündet. Je nach Drehposition der beiden rohrähnlichen Hohlkörper zueinander ist maximal einer der Farbzufuhrkanäle 56, 58 über die Einlassöffnung 62 mit dem zeichnerisch deutlich zu groß dargestellten Innenraum 76 verbunden, so dass Lackmaterial aus dem jeweiligen Farbschlauch 60 in Pfeilrichtung 64, 66 eintreten kann.

Zur Reduktion des Risikos einer Farbverschleppung sind sowohl um die Mündungen der Farbversorgungskanäle 56, 58 als auch um die Einlassöffnung 62 herum optionale Abdichtmittel in Form von Dichtungsringen 70 vorgesehen. Der gewünschte Abdichteffekt wird jedoch auch erreicht, wenn lediglich die Einlassöffnung mit einem Dichtring versehen ist.

### Bezugszeichenliste

- 10: Schnitt durch einen exemplarischen ersten Farbwechsler
- 12: erster rohrähnlicher Hohlkörper
- 14: erster Farbversorgungskanal
- 16: zweiter Farbversorgungskanal
- 18: dritter Farbversorgungskanal
- 20: vierter Farbversorgungskanal
- 22: fünfter Farbversorgungskanal
- 24: innerer Zentralkanal
- 26: erster Farbschlauch
- 28: zweiter Farbschlauch
- 30: dritter Farbschlauch
- 32: vierter Farbschlauch
- 34: fünfter Farbschlauch
- 36: zweiter rohrähnlicher Hohlkörper
- 38: Einlasskanal
- 40: kanalähnlicher Innenraum des zweiten Hohlkörpers
- 42: rotatorische Bewegungskomponente
- 44: axiale Bewegungskomponente
- 46: Ausgleichsöffnung
- 48: Länge der axialen Bewegbarkeit von zweitem Hohlkörper
- 49: Anschlussmittel
- 50: Schnitt durch einen exemplarischen zweiten Farbwechsler
- 52: erster rohrähnlicher Hohlkörper
- 54: zweiter rohrähnlicher Hohlkörper
- 56: sechster Farbversorgungskanal
- 58: siebter Farbversorgungskanal
- 60: sechster Farbschlauch
- 62: Einlassöffnung
- 64: durch Farbschlauch fließendes Lackmaterial
- 66: durch Einlassöffnung fließendes Lackmaterial
- 68: rotatorische Bewegungskomponente
- 70: Dichtungsringe
- 72: erstes Ventil
- 74: zweites Ventil
- 76: kanalähnlicher Innenraum des zweiten Hohlkörpers

## Patentansprüche

1. Farbwechsler (10, 50), umfassend
• einen ersten rohrähnlichen Hohlkörper (12, 52) mit einer Mehrzahl von Farbversorgungskanälen (14, 16, 18, 20, 22, 56, 58), welche durch die Wandung des ersten Hohlkörpers (12, 52) zu einem inneren Zentralkanal (24) geführt sind und welche an ihrem dem Zentralkanal abgewandten Ende dafür vorgesehen sind, mit einem Farbversorgungssystem (26, 28, 30, 32, 34, 60) verbunden zu werden,
• einen zweiten rohrähnlichen Hohlkörper (36, 54) mit einem exakt auf den Innenquerschnitt des Zentralkanals (24) angepassten Außenquerschnitt und einem Einlasskanal (38, 62) mit annähernd auf den Querschnitt der Farbversorgungskanäle (14, 16, 18, 20, 22, 56, 58) angepassten Querschnitt, welcher durch die Wandung des zweiten Hohlkörpers (36, 54) in dessen kanalähnlichen Innenraum (40, 76) geführt ist, dessen eines Ende hermetisch verschließbar beziehungsweise verschlossen ist und an dessen anderem Ende Anschlussmittel (49) vorgesehen sind,
wobei der zweite Hohlkörper (36, 54) zumindest teilweise innerhalb des Zentralkanals (24) des ersten Hohlkörpers (12, 54) beweglich (42, 44, 68) angeordnet ist, so dass je nach Relativposition der beiden Hohlkörper zueinander der Einlasskanal (38, 62) wahlweise mit einem der Farbversorgungskanäle (14, 16, 18, 20, 22, 56, 58) verbunden ist,
***dadurch gekennzeichnet, dass***
*der zweite Hohlkörper (36, 54) längs der axialen Erstreckung des Zentralkanals (24) bewegbar (44) ist.*

2. Farbwechsler *nach Anspruch 1,* **dadurch gekennzeichnet, dass** der Zentralkanal (24) einen kreisrunden Querschnitt aufweist und der zweite Hohlkörper (36, 54) in dem Zentralkanal (24) drehbar (42, 54) ist.

3. Farbwechsler *nach einem der Ansprüche 1 oder 2*, **dadurch gekennzeichnet, dass** der zweite Hohlkörper (36, 54) mittels einer spiralähnlichen Drehbewegung gegenüber dem Zentralkanal (24) bewegbar ist.

4. Farbwechsler nach einem der vorherigen Ansprüche, **dadurch gekennzeichnet, dass** eine Antriebsvorrichtung zur Bewegung des zweiten Hohlkörpers (36, 54) vorgesehen ist.

5. Farbwechsler nach Anspruch 4, dadurch dass die Antriebsvorrichtung wenigstens einen Stellantrieb umfasst.

6. Farbwechsler nach einem der vorherigen Ansprüche, **dadurch gekennzeichnet, dass** der zweite Hohlkörper (36, 54) kraftschlüssig mit einer drehbar in einem Gewindegang angeordneten Gewindespindel verbunden ist, so dass hierdurch die Bewegung (42, 44, 68) des zweiten Hohlkörpers (36, 54) vorgegeben ist.

7. Farbwechsler nach einem der vorherigen Ansprüche, **dadurch gekennzeichnet, dass** die axiale Länge des zweiten Hohlkörpers (36, 54) wenigstens der doppelten Länge von dessen axialer Bewegbarkeit (48) entspricht und dass der Einlasskanal (38, 62) axial mittig zur doppelten Länge der axialen Bewegbarkeit (48) angeordnet ist.

8. Farbwechsler nach einem der vorherigen Ansprüche, **dadurch gekennzeichnet, dass** wenigstens einer der Farbversorgungskanäle (14, 16, 18, 20, 22, 56, 58) oder der Einlasskanal (38, 62) auf der jeweils in den Zentralkanal (24) mündenden Seite von einer jeweiligen Abdichtvorrichtung (70) umgeben ist.

9. Farbwechsler nach Anspruch 8, **dadurch gekennzeichnet, dass** die Abdichtvorrichtung (70) aus einem elastischen Material gefertigt ist und derart angeordnet ist, dass sie geringfügig in den Zentralkanal (24) hineinragt.

10. Farbwechsler nach einem der vorherigen Ansprüche, **dadurch gekennzeichnet, dass** in den Farbversorgungskanälen (14, 16, 18, 20, 22, 56, 58) Ventilmittel (72, 74) vorgesehen sind.

11. Farbwechsler nach einem der vorherigen Ansprüche, **dadurch gekennzeichnet, dass** über eine der beiden Stirnseiten des zweiten rohrähnlichen Hohlkörpers ein Spülkanal in dessen kanalähnlichen Innenraum geführt ist, der stirnseitig für einen Anschluss mit einer Lösemittelversorgung vorgesehen ist.

12. Farbwechsler nach einem der vorherigen Ansprüche, **dadurch gekennzeichnet, dass** wenigstens einer der beiden Hohlkörper (12, 36, 52, 54) aus Edelstahl gefertigt ist.

13. Farbwechsler nach einem der vorherigen Ansprüche, **dadurch gekennzeichnet, dass** die Kontaktflächen der gegeneinander beweglichen Hohlkörper (12, 36, 52, 54) poliert sind.

## Claims

1. Colour changer (10, 50), comprising
• a first tubular hollow body (12, 52) having a plurality of colour supply channels (14, 16, 18, 20, 22, 56, 58), which are led through the wall of the first hollow body (12, 52) to an inner central channel (24) and which, at their end facing away from the central channel, are provided to be connected to a colour supply system (26, 28, 30, 32, 34, 60),
• a second tubular hollow body (36, 54) with an external cross section matched exactly to the internal cross section of the central channel (24), and an inlet channel (38, 62) with a cross section matched approximately to the cross section of the colour supply channels (14, 16, 18, 20, 22, 56, 58), which inlet channel is led through the wall of the second hollow body (36, 54) into the channel-like interior (40, 76) of the latter, one end of which can be or is sealed hermetically and at the other end of which connecting means (49) are provided,
the second hollow body (36, 54) being at least partly arranged within the central channel (24) of the first hollow body (12, 54) such that it can be moved (42, 44, 48), so that, depending on the relative position of the two hollow bodies in relation to each other, the inlet channel (38, 62) is optionally connected to one of the colour supply channels (14, 16, 18, 20, 22, 56, 58), **characterized in that**
the second hollow body (36, 54) can be moved (44) along the axial extent of the central channel (24).

2. Colour changer according to Claim 1, **characterized in that** the central channel (24) has a circular cross section and the second hollow body (36, 54) can be rotated (42, 54) in the central channel (24).

3. Colour changer according to either of Claims 1 and 2, **characterized in that** the second hollow body (36, 54) can be moved with respect to the central channel (24) by means of a spiral rotational movement.

4. Colour changer according to one of the preceding claims, **characterized in that** a drive device is provided in order to move the second hollow body (36, 54).

5. Colour changer according to Claim 4, **characterized in that** the drive device comprises at least one actuating drive.

6. Colour changer according to one of the preceding claims, **characterized in that** the second hollow body (36, 54) is connected by a force fit to a threaded spindle rotatably arranged in a thread, so that by this means the movement (42, 44, 68) of the second hollow body (36, 54) is predefined.

7. Colour changer according to one of the preceding claims, **characterized in that** the axial length of the second hollow body (36, 54) corresponds to at least twice the length of its possible axial movement (48), and **in that** the inlet channel (38, 62) is arranged axially centrally in relation to twice the length of the possible axial movement (48).

8. Colour changer according to one of the preceding claims, **characterized in that** at least one of the colour supply channels (14, 16, 18, 20, 22, 56, 58) or the inlet channel (38, 62) is surrounded by a respective sealing device (70) on the side respectively opening into the central channel (24).

9. Colour changer according to Claim 8, **characterized in that** the sealing device (70) is made of a resilient material and is arranged in such a way that it projects slightly into the central channel (24).

10. Colour changer according to one of the preceding claims, **characterized in that** valve means (72, 74) are provided in the colour supply channels (14, 16, 18, 20, 22, 56, 58).

11. Colour changer according to one of the preceding claims, **characterized in that** a flushing channel is led into the channel-like interior of the second tubular hollow body via one of the two ends of the latter and, at the ends, is provided to be connected to a solvent supply.

12. Colour changer according to one of the preceding claims, **characterized in that** at least one of the two hollow bodies (12, 36, 52, 54) is made of stainless steel.

13. Colour changer according to one of the preceding claims, **characterized in that** the contact faces of the hollow bodies (12, 36, 52, 54) that can be moved with respect to each other are polished.

## Revendications

1. Changeur de teinte (10, 50), comprenant
- un premier corps creux de type tubulaire (12, 52), comprenant une pluralité de canaux d'alimentation en couleurs (14, 16, 18, 20, 22, 56, 58), qui sont guidés à travers la paroi du premier corps creux (12, 52) jusqu'à un canal central interne (24) et qui sont prévus, au niveau de leur extrémité opposée au canal central, pour être connectés à un système d'alimentation en couleurs (26, 28, 30, 32, 34, 60),
- un deuxième corps creux de type tubulaire (36, 54) ayant une section transversale extérieure adaptée exactement à la section transversale intérieure du canal central (24) et un canal d'entrée (38, 62) ayant une section transversale adaptée approximativement à la section transversale des canaux d'alimentation en couleurs (14, 16, 18, 20, 22, 56, 58), lequel est guidé à travers la paroi du deuxième corps creux (36, 54) dans son espace interne de type canal (40, 76), dont une extrémité peut être ou est fermée hermétiquement et à l'autre extrémité duquel sont prévus des moyens de raccordement (49),
le deuxième corps creux (36, 54) étant disposé au moins en partie à l'intérieur du canal central (24) du premier corps creux (12, 54) de manière déplaçable (42, 44, 68), de telle sorte qu'en fonction de la position relative des deux corps creux l'un par rapport à l'autre, le canal d'entrée (38, 62) soit connecté de manière sélective à l'un des canaux d'alimentation en couleurs (14, 16, 18, 20, 22, 56, 58),
**caractérisé en ce que**
le deuxième corps creux (36, 54) peut être déplacé (44) le long de l'étendue axiale du canal central (24).

2. Changeur de teinte selon la revendication 1, **caractérisé en ce que** le canal central (24) présente une section transversale ronde circulaire et le deuxième corps creux (36, 54) peut tourner (42, 54) dans le canal central (24).

3. Changeur de teinte selon l'une quelconque des revendications 1 ou 2, **caractérisé en ce que** le deuxième corps creux (36, 54) peut être déplacé par rapport au canal central (24) au moyen d'un mouvement de rotation de type spiral.

4. Changeur de teinte selon l'une quelconque des revendications précédentes, **caractérisé en ce qu'**un dispositif d'entraînement est prévu pour le déplacement du deuxième corps creux (36, 54).

5. Changeur de teinte selon la revendication 4, **caractérisé en ce que** le dispositif d'entraînement comprend au moins un entraînement de réglage.

6. Changeur de teinte selon l'une quelconque des revendications précédentes, **caractérisé en ce que** le deuxième corps creux (36, 54) est connecté par engagement par force à une broche filetée disposée à rotation dans un pas de filetage, de telle sorte que le déplacement (42, 44, 68) du deuxième corps creux (36, 54) soit prédéfini de ce fait.

7. Changeur de teinte selon l'une quelconque des revendications précédentes, **caractérisé en ce que** la longueur axiale du deuxième corps creux (36, 54) correspond au moins à la double longueur de sa capacité de déplacement axial (48) et **en ce que** le canal d'entrée (38, 62) est disposé axialement au centre par rapport à la double longueur de la capacité de déplacement axial (48).

8. Changeur de teinte selon l'une quelconque des revendications précédentes, **caractérisé en ce qu'**au moins l'un des canaux d'alimentation en couleurs (14, 16, 18, 20, 22, 56, 58) ou le canal d'entrée (38, 62) est entouré du côté débouchant à chaque fois dans le canal central (24) par un dispositif d'étanchéité respectif (70).

9. Changeur de teinte selon la revendication 8, **caractérisé en ce que** le dispositif d'étanchéité (70) est fabriqué en un matériau élastique et est disposé de telle sorte qu'il pénètre légèrement dans le canal central (24).

10. Changeur de teinte selon l'une quelconque des revendications précédentes, **caractérisé en ce que** des moyens de vanne (72, 74) sont prévus dans les canaux d'alimentation en couleurs (14, 16, 18, 20, 22, 56, 58).

11. Changeur de teinte selon l'une quelconque des revendications précédentes, **caractérisé en ce qu'**un canal de rinçage est guidé par le biais de l'un des deux côtés frontaux du deuxième corps creux de type tubulaire dans son espace interne de type canal, lequel est prévu du côté frontal pour un raccordement avec une alimentation en solvant.

12. Changeur de teinte selon l'une quelconque des revendications précédentes, **caractérisé en ce qu'**au moins l'un des deux corps creux (12, 36, 52, 54) est fabriqué en acier inoxydable.

13. Changeur de teinte selon l'une quelconque des revendications précédentes, **caractérisé en ce que** les surfaces de contact des corps creux (12, 36, 52, 54) déplaçables les uns par rapport aux autres sont polies.
